# EUROPEAN PATENT SPECIFICATION

(11) **EP 4 014 458 B1**
(45) Date of publication and mention of the grant of the patent: **07.10.2026**
(21) Application number: 19786660.1
(22) Date of filing: 15.08.2019
(51) Int. Cl.: H04L 69/08, H04L 67/12, G05B 19/418, H04L 67/125, H04L 69/10, H04L 69/18, H04L 12/46, H04W 4/38, H04W 4/70

(54) **INDUSTRIAL AUTOMATION WITH CELLULAR NETWORK**
INDUSTRIELLE AUTOMATISIERUNG MIT EINEM ZELLULAREN NETZWERK
AUTOMATISATION INDUSTRIELLE AVEC RÉSEAU CELLULAIRE

(43) Date of publication of application: 22.06.2022
(73) Proprietor: Telefonaktiebolaget LM Ericsson (publ), 164 83 Stockholm (SE)
(72) Inventor: IUN, Edwin, Ottawa, Ontario K2T 1J5 (CA); DAWADI, Rajesh, Ottawa, Ontario K2B 7S9 (CA); VIEIRA, Elvis, Ottawa, Ontario K2T 1A9 (CA)
(74) Representative: Murgitroyd & Company
(86) International application number: PCT/IB2019/056919
(87) International publication number: WO 2021/028717

(56) References cited:
- WO-A1-2018/141355
- US-A1- 2016 157 283
- 5G PPP ARCHITECTURE WORKING GROUP: "View on 5G Architecture", 19 June 2019 (2019-06-19), XP055673824, Retrieved from the Internet <URL:https://5g-ppp.eu/wp-content/uploads/2019/07/5G-PPP-5G-Architecture-White-Paper_v3.0_PublicConsultation.pdf> [retrieved on 20200304]
- IEC: "Monitoring and impact assessment of emerging technologies and architectures (Draft 1830.121.2018)", vol. 802.24, 11 March 2019 (2019-03-11), pages 1 - 93, XP068148952, Retrieved from the Internet <URL:grouper.ieee.org/groups/802/24/private/IEC SEG8/SEG8-WG1-53R1 IEC_SEG8_Deliverable2-2018-12-18.pdf> [retrieved on 20190311]

## Description

### TECHNICAL FIELD

Wireless communication and in particular, automation control via a cellular network.

### BACKGROUND

### Industry 4.0

Industry 4.0 (also referred to as I4.0 or I4) describes the existing trend of automation and data exchange in manufacturing technologies that have a potential to significantly boost productivity, reduce costs and improve the product quality. In particular, Industry 4.0 allows fine control of production at every step of the process, thereby helping improve quality, and also helps reduce and even eliminate downtime, because the data from the automated equipment indicates when maintenance is needed or when it's about to break down.

### Interconnect in Industry 4.0

When applied to manufacturing, one aspect of the Industry 4.0 is based on real-time monitoring and controlling of the manufacturing process, typically through sensors collecting data from automated machinery, robots and equipment for transmission to controllers, etc. However, the interconnection of these automation devices and controllers is still mainly performed through wired connections such as via Ethernet based wired networks. Further, the industry is fragmented with more than 30 industrial Ethernet protocols. The following five are most commonly used in factory automation settings:
- EtherCAT - optimized for processing data and scalable across a wide range of equipments with low latency in each slave node.
- PROFINET IO - a widely used industrial Ethernet protocol with three different classes of latency standards. PROFINET IO TCP/IP is for non time-critical data as it has a reaction time of 100 ms. RT (Real-Time) protocol is for software applications that may require up to 10 ms cycle times. IRT (Isochronous Real-Time) is for applications such as in drive systems where cycle times of hundreds of microseconds to 1 ms may be required.
- Ethernet/IP - an application-layer protocol using Common Industrial Protocol (CIP) over TCP/IP. Ethernet/IP provides a standard set of services and messages across nodes, therefore may be easy to integrate. However, Ethernet/IP suffers from limited real-time and deterministic capabilities.
- POWERLINK - can be an open-source software solution implemented on top of existing application processors.
- Sercos III - often used in servo-drive controls, with cycle times as low as 31.25 microseconds, however the topology is typically either ring or line topologies with only up to 511 slave nodes.

Each protocol may have its advantage(s) in a different scenario, but as wire based technologies, these interconnections are difficult to scale, physically. For example, as the number of connected automated devices grows, it becomes intensively difficult to install more cables in the manufacturing facility. Further, these wired technologies may be difficult to implement in for mobile robots that may rely on wireless connections due to their mobility to keep communicating with controllers.

### Transmission Mode that may be used in Industry 4.0

The transmission of a stream of bits can be:
- Non-real time or asynchronous transmission.
- Real time transmission.

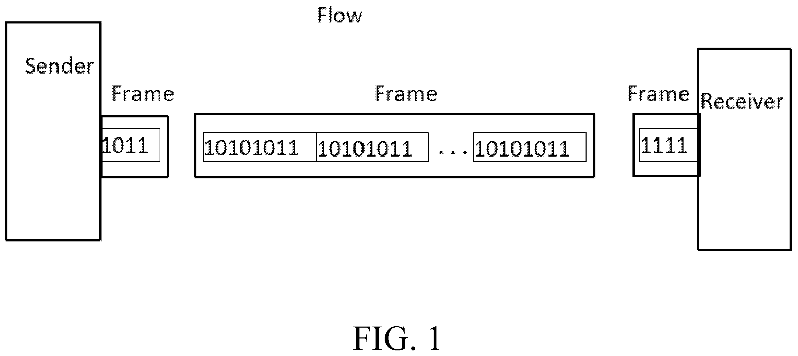

FIG. 1 is a diagram of an example data transmission mode. Real time transmission can be further divided in:
- Synchronous Real-time transmission
- Isochronous Real-time (IRT) transmission

In isochronous transmission, the entire stream of bits is synchronized as illustrated in FIG. 1. Conversely, in synchronous transmission, the synchronization is per bit while in asynchronous transmission there is little, if any, synchronization at all. Therefore, in isochronous transmission, there is a "due" time for the entire stream to arrive at the receiver. In the synchronous transmission, the due time is for each bit, no matter whether the entire stream was received or not. Asynchronous transmission does not have a due time for sending or receiving a data stream.

Furthermore, a transmitting capacity of the network may be greater than the sending/transmission rate of isochronous applications. For isochronous applications, there may be no waiting time to transmit new data stream. Further, synchronous transmission may not be successful in some applications as real-time video, in which uneven delays between frames of images broadcasted at 30 frames per second may not be acceptable for video playback. These types of applications may need to transfer data using an isochronous transmission which guarantees that the data arrive at a fixed rate.

### Closed Loop Gain Control (CLGC)/Closed loop Control (CLC)

Another common application is closed loop gain control (CLGC) (also referred to as closed loop control (CLC)) that allows for the control of robots or automated devices in manufacturing facilities. CLGC applications may have strict transmission requirements that may require the use of isochronous transmissions with low latency, high reliability and small signal jitter.

CLGC is used in robot automation such as in smart manufacturing as CLGC is a mechanism to control robotic operations in manufacturing processes. An example of a CLGC controller includes PID (Proportional Integral Derivative) controllers that may be implemented in industrial facilities to control manufacturing processes. CLGC may use an instantaneous feedback signal from the process output with high predictable timing accuracy to allow delicate/fine control of robot operations to be performed such as motion operations of robotic arms. The isochronous real-time communications enable integration support for real-time CLGC with very low latency as these types of applications may be critical for the efficiency and quality assurance of an automated manufacturing process involving robots, unmanned vehicles, and sensors, among other processes.

CLGC functionality may be implemented in a controller that performs control of a manufacturing process though a variable gain process (VGP) by periodically reading a feedback signal derived from the output of the process and applying corrections when needed. The time between sensing the output of the process to produce the feedback signal and applying the correction to the VGP that adjusts the manufacturing process should be as minimal as possible. A large delay anywhere in this control process could invalidate the correction calculated from the feedback signal, resulting in, for example, damage to equipment in the production line and safety issues. The correction intervals may be kept the same, avoiding large signal jitters, such as to help keep the precision and stability of the CLGC algorithm executed in the controller.

Thus, CLGC in the manufacturing processing may involve an isochronous task that may require real-time execution and time-slotted communication between the CLGC controller and sensors to measure the signal for the feedback. Typically, a CLGC cycle time could consist of either:
- A periodic downlink transaction from the CLGC controller to a set of sensors/meters which is followed by uplink responses by the sensors to the CLGC controller; or
- A periodic downlink transaction from the CLGC controller to a set of VGPs which is followed by uplink responses by the VGP to the CLGC controller.

In general, time sensitive networks (TSNs) may specify requirements for communications during cycle times that may need to be completed within a 1 ms cycle time with 99:999% reliability. Furthermore, the maximum jitter that may be allowed to occur in TSNs is 1 µs, which also imposes on the delivery of responses a time synchronization accuracy better than 500 ns among devices.

### PROFINET IO in Automation

PROFINET IO is an industry technical standard for data communication over Industrial Ethernet, designed for collecting data from, and controlling equipment in industrial systems, while delivering data under stringent time constraints. In an existing PROFINET IO network, a CLGC controller wireless device controls an automated wireless device via a 4G/5G network. The interconnection between devices of a PROFINET IO network may be achieved by defining real-time classes (CC-A, CC-B and CC-C) for data exchange that involve unsynchronized and/or synchronized communication. These classes are summarized in Table 1.

**Table 1**

| **Properties of Real Time Classes** | **Real Time Classes** | | |
|---|---|---|---|
| | **CC-A** | **CC-B** | **CC-C** |
| **PROFINET IO feature** | PROFINET IO with RT communication | PROFINET IO with RT communication | PROFINET IO with IRT communication |
| **Media** | IEC 61784-5-3 and ISO/IEC 24702 (CC-A Cabling Guide) Copper, fiber, wireless | IEC 61784-5-3 Copper, fiber | IEC 61784-5-3 Copper, fiber |
| **Applications** | Infrastructure Building automation | Factory automation Process automation | Motion Control Closed Loop Gain Control (CLGC) |

Class CC-C is designed for Isochronous Real Time (IRT) transmission for loop control and robotic motion operations. The data exchange cycles in this class are usually in the range of a few hundred microseconds up to a few milliseconds. The difference of Class CC-C from Class CC-B for real-time communication revolves around a high degree of determinism with high precision.

PROFINET IO can be implemented in a wired or wireless network; however fixed cable is the most common in existing systems for robustness and reliability for IRT. PROFINET IO cable and wireless solutions are described below:
- Cable Solution: PROFINET IO cables are industrial Ethernet cables, sometimes referred to as industrial Cat5 or two-pair Cat5, for the TCP/IP protocol. Another possible cabling solution is optical fiber cable. The fixed cable types are suitable for fixed or dynamic flexible industrial automation applications. Due to Ethernet being an open network that allows any device to transmit at any time on a network or the same medium, messages may need to be delivered sequentially and may be traffic loading dependent.
- Wireless Solution: PROFINET IO is based on Ethernet technology that may work with wireless standards such as IEEE 802.11 or IEEE 802.15.1. These wireless standards include both 2.4Ghz and 5Ghz WiFi as well as BLUETOOTH applications. However, these wireless standards allow for the wireless channel to be a shared medium, which means determinism as far as when an entire data stream is to be received is difficult to achieve.

### CLGC Controller in 4G/5G

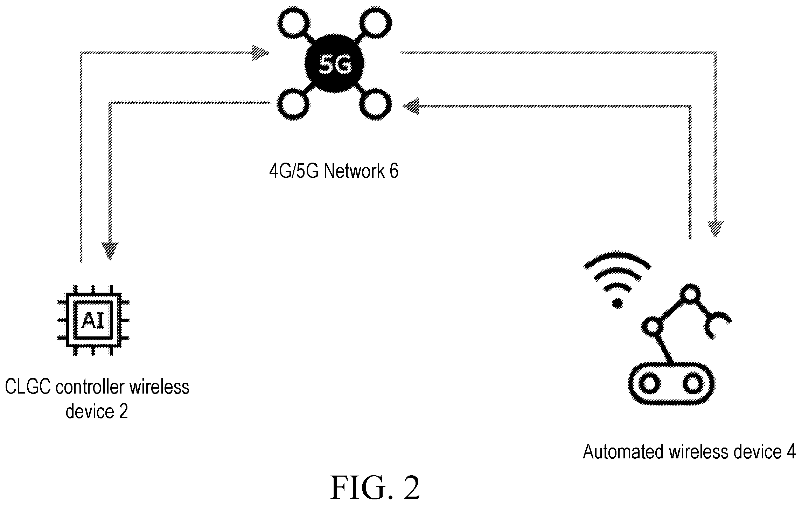

FIG. 2 is a diagram of an example of how a CLGC controller wireless device 2 may be implemented in a 4^{th} Generation (4G)/5^{th} Generation (5G) network. The CLGC controller wireless device 2 triggers a periodic message to a set of sensors/meters or VGP on the automated wireless device 4 such as a robot wireless device. The CLGC controller wireless device 2 is expected to receive a response message with feedback measurement(s). Since the message exchange is isochronous, the data stream is isochronous with high predictability.

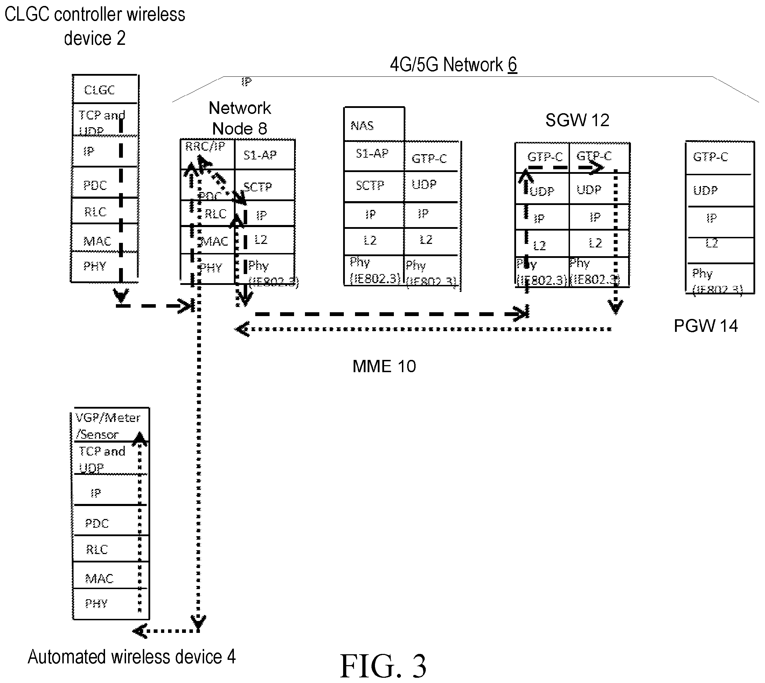

FIG. 3 illustrates the packet flow from the CLGC controller wireless device 2 implemented using TCP/IP stack in the 4G/5G network. The dashed lines indicate the flow through the several nodes in the network. The backward flow is not shown in FIG. 3 but operates in the reverse manner from the forward flow. The forward flow originates in the CLGC controller wireless device 2 and ends at the automated wireless device 4. For the packets to get to automated wireless device 4, the TCP/IP packet from the controller wireless device 2 is sent through its TCP/IP and 4G/5G stacks. In the 4G/5G, PHY is sent through an air interface to the network node 8 (e.g., eNodeB and/or gNodeB). In the network node 8, the packet goes up to the IP layer and is sent via Ethernet to the SGW 12 (IP router). The SGW 12 forwards the IP packet to the previous 4G/5G network node 8 as the controller wireless device 2 and the automated wireless device 4 are camped close enough to each other to be served by the same network node 8. The IP packet then traverses all the way down through the TCP/IP and 4G/5G stacks and is sent to the automated wireless device 4 through the air interface. The automated wireless device 4 receives the packet from its air interface and sends it to the VGP, meter or sensor destination crossing the 4G/5G and TCP/IP stacks.

The latency in this path from controller wireless device 2 to automated wireless device 4 is very high since there are various hops, not only from the air interface, but also from the wired connections connecting the network node 8 to SGW 12 and the internal processing delay of the several 4G/5G and TCP/IP stacks. The latency of around 40ms is typical from this configuration.

Table 2 summarizes example latencies for various components (algorithms and protocols) in data transmission from an application in a wireless device 2 to the SGW 12 (uplink) and back (downlink). The two sources of delay in radio access networks are the link establishment (i.e., grant acquisition or random access) and packet retransmissions caused by channel errors and congestion. Another delay component is the transmission time interval (TTI), defined as the minimum data block length, which is involved in each transmission of grant, data, and retransmission due to errors detected in higher layer protocols.

**Table 2- Various delay sources of an LTE system in the uplink and downlink**

| Delay Component | Description | Time (ms) |
|---|---|---|
| Grant acquisition | A wireless device connected and aligned to a network node may send a Scheduling Request (SR) when it has data to transmit. | 5ms |
| | The SR can only be sent in an SR-valid Physical Uplink Control Channel (PUCCH). | |
| | This component characterizes the average waiting time for a PUCCH. | |
| Random access | This procedure applies to the wireless device not aligned with the network node. To establish a link, the wireless device initiates an uplink grant acquisition process over the random access channel. This process includes preamble transmissions and detection, scheduling, and processing at both the wireless device and the wireless device. | 9.5 ms |
| Transmit time interval | The minimum time to transmit each packet of request, grant or data | 1 ms |
| Signal processing | The time used for the processing (e.g., encoding and decoding) data and control | 3 ms |
| Packet retransmission in access network | The (uplink) hybrid automatic repeat request process delay for each retransmission | 8 ms |
| Core network/Internet | Queueing delay due to congestion, propagation delay, packet retransmission delay caused by upper layer (e.g., TCP) | Vary widely |

According to Table 2, after a wireless device 2 and/or 4 is aligned with the network node 8, the wireless device's total average radio access delay for an uplink transmission can be up to 17ms excluding any retransmission, which includes the following latency components:
- Wireless device 2 and/or 4's waiting time for a Physical Uplink Control Channel (PUCH): 5ms.
- Sending time for the wireless device 2 and/or 4's scheduling request: 1ms.
- Network node 8's decoding time of the scheduling request plus the generating time of the network node 8's scheduling grant: 3ms
- Sending time for the network node 8 to send the scheduling grant: 1ms.
- Wireless device 2 and/or 4 decoding time of the scheduling grant: 3ms.
- Wireless device 2 and/or 4 sending time of uplink data: 1ms.
- Network node 8 decoding time of wireless device data: 3ms.

The downlink data transmission includes the following latency components:
- Time to process incoming data: 3ms.
- TTI alignment: 0.5ms.
- Transmission time of the downlink data: 1ms.
- Time for data decoding in wireless device 2 and/or 4: 3ms (which sums up to 7.5ms and is lower than that of the uplink since no grant acquisition process is needed in the downlink).

The overall end-to-end latency in cellular networks may be dictated not only by the radio access network but may also include delays of the core network, data center/cloud, Internet server and radio propagation. The end-to-end latency may increase with the transmitter-receiver distance and the network load. For example, it has been demonstrated that at least 39 ms may be needed to contact the core network gateway, which connects the LTE system to the Internet, while a minimum of 44 ms may be required to get response from the server. As the number of wireless devices in the network rises, the delay goes up, due to more frequent collisions in grant acquisition and retransmissions caused by inter-wireless device interference.

Document "View on 5G Architecture", 5G PPP Architecture Working Group (19 June 2019) may be construed to disclose (i) several enhancements to the 3GPP Rel.15 system architecture to address specific requirements from vertical industries, (ii) the RAN architecture and the relevance of the edge to enable local computing and local path to support diverse variety of requirements in terms of latency, throughput and reliability, (iii) the CN architecture and the infrastructure connectivity provided by the Transport Network architecture - in order to achieve the required flexibility, the management and orchestration architecture plays a key role, (iv) to enable different verticals and large variety of requirements need to be supported, examples of architecture deployments investigated and analysed in the 5GPPP projects, and (v) the standardization impact that the work done have already achieved in different standardization bodies with special focus on 3GPP and ETSI.

Document US 2016/157283 A1 may be construed to disclose measures for mobility management for device-to-device communications. Such measures exemplarily include receiving a radio handover request message indicating that a radio handover of at least one communication endpoint utilizing device-to-device communication is to be hidden from core network, and determining, based on device-to-device context information, which is information on said device-to-device communication, and/or on information on said at least one communication endpoint, whether a notification of said radio handover is to be transmitted.

Document WO 2018/141355 A1 may be construed to disclose a base station for enabling radio bearers' establishment and radio path formation to support end-to-end transmission of localized data among a group of communication devices, in particular machine-type communication (MTC) devices, the BS comprising: a radio controller configured: to receive a session IO request message from a communication device of the group of communication devices, wherein the session request message comprises information about a specific service; to establish a plurality of radio bearers among the group of communication devices and to form a plurality of radio paths over the plurality of radio bearers according to the information about the specific service to support end-to-end transmission of localized data between the communication devices of the group of communication devices.

Document "Monitoring and impact assessment of emerging technologies and architectures (Draft 1830.121.2018)", IEEE draft SEG8-WG1-53R1 may be construed to disclose an interworking framework that is built around IPE, which communicates both oneM2M, and non-oneM2M protocols on two sides and is responsible for protocol translation, service discovery and exposure bi-directionally. Moreover, a 5G LAN service would provide direct private IP and non-IP communication between two or more devices. It presents a virtual private network that supports the same functionality as existing LANs (e.g. Ethernet layer 2 connectivity).

### SUMMARY

Some embodiments advantageously provide a method, network node, wireless device and system for automation control via a cellular network.

According to the disclosure, there are provided a method, a computer-readable medium, and a network according to the independent claims. Further developments are set forth in the dependent claims.

According to a first aspect of the present disclosure, there is provided a method implemented by a network node comprising a bridge unit and configured to communicate with at least one core entity in a core network and at least one automated device. The method comprises forwarding, at open system interconnection, OSI, layer 2, of controller data packets received from a controller wireless device via a radio interface to an automated device via the bridge unit without transmitting the controller data packets to the core network in order to bypass the at least one core entity, the controller packets configured to at least in part control the automated device; and causing transmission of the controller data packets to the automated device using one of at least one of the radio interface and one of a wired interface and wireless interface.

According to a second aspect of the present disclosure, there is provided a computer-readable medium comprising code portions which, when executed on a processor of a network node, configure the network node to perform all the steps of the method according to the first aspect.

According to a third aspect of the present disclosure, there is provided a network node configured to communicate with at least one core entity in a core network and at least one automated device. The network node comprises a radio interface and one of a wired interface and wireless interface; and processing circuitry comprising a bridge unit, the processing circuit being configured to forward, at open system interconnection, OSI, layer 2, controller data packets received from a controller wireless device via the radio interface to an automated device via the bridge unit without transmitting the controller data packets to the core network in order to bypass the at least one core entity, the controller packets configured to at least in part control the automated device; and cause transmission of the controller data packets to the automated device using one of the at least one of the radio interface and one of the wired interface and wireless interface.

Whenever in the following disclosure any of the above-stated aspects (independent claims) is disclosed as "optional" (e.g. due to usage of conjunctive terms, such as "can", "may", "should" etc.), it is nevertheless to be read as "mandatory".

### BRIEF DESCRIPTION OF THE DRAWINGS

Hereinabove and in the following, "examples" pertain to principles underlying the claimed subject-matter and/or being useful for understanding the claimed subject-matter, while "embodiments" pertain to the claimed subject-matter within the claim scope. A more complete understanding of the present embodiments, and the attendant advantages and features thereof, will be more readily understood by reference to the following detailed description when considered in conjunction with the accompanying drawings wherein:
FIG. 1 is a diagram of a data transmission mode according to an example;
FIG. 2 is a diagram of a CLGC controller wireless device implemented in a 4G/5G network according to an example;
FIG. 3 is a packet data flow implemented using TCP/IP stack in the 4G-5G network according to an example;
FIG. 4 is a schematic diagram of a communication system according to an embodiment of the present disclosure;
FIG. 5 is a diagram of some elements of FIG. 4 according to an embodiment of the present disclosure;
FIG. 6 is a flowchart of a process in a network node according to an embodiment of the present disclosure;
FIG. 7 is a flowchart of a process in a controller wireless device according to an example;
FIG. 8 is a diagram of a system according to an example;
FIG. 9 is a diagram of a system according to an example;
FIG. 10 is a diagram of a data path in the system according to an embodiment of the present disclosure;
FIG. 11 is a diagram of a data path in the system according to an embodiment of the present disclosure;
FIG. 12 is a diagram of an address mapping according to an example;
FIG. 13 is a diagram of resource elements, resource blocks and subcarriers according to an example;
FIG. 14 is a diagram of a resource block allocation according to an example;
FIG. 15 is a flow diagram of a resource allocation process according to an example;
FIG. 16 is a flow diagram of a resource allocation process according to an example; and
FIG. 17 is a diagram of a cloud networking based implementation of the network node according to an example.

Whenever in the following disclosure the term "embodiment" occurs, reference is to be made to the figure description above to clarify whether an embodiment or an example is meant.

### DETAILED DESCRIPTION

An automation deployment may require easy scalability, high device density, predictable latency and reliable coverage throughout the factory, warehouse, premises, etc. A wired solution where wires, i.e., ethernet cables, connect automation devices, can achieve isochronous transmission but is not easily physically scalable. On the other hand, a WiFi solution where automation devices are connected wirelessly is scalable but the wireless transmission cannot be guaranteed to be isochronous.

With respect to the wired solution, existing systems for robotic control rely on cable infrastructure, specially based on PROFINET IO to generally provide latencies less than 1ms, jitter less than 1 microseconds and reliability of 99.9999% or more as may be required by the isochronous transmissions of these automation applications. However, as Industry 4.0 may start to demand a larger number of equipment, one or more of mobility, scalability and flexibility may become factors as to how to configure the wireless infrastructure to meet these new demands. Although PROFINET IO on WiFi has been implemented in existing system to mitigate the scalability and flexibility issues, it is still limited due to being a shared resource based system with limited predictability.

Existing application layer 4G and 5G Internet traffic do not support isochronous communications, at least in part because of high latency and jitter. Both 4G and 5G wireless technologies rely on IP which offers little support to implement the cycle time required by isochronous real-time communication. Further, existing 4G and/or 5G does not offer a mechanism to divide the channel into specific slots to implement the synchronization support like that offered by PROFINET IO bus. Also, even though solutions are being investigated that may offer latency in the order of 1ms, existing 4G/5G still does not meet the transmission requirements for automated devices (robots, controllers, sensors and VGP) employed in industrial manufacturing processes where some of these transmission requirements may include one or more of:
- Latency less than 1ms from the robots to the controller.
- Jitter less than one microseconds.
- Reliability greater than 99.9999%.

The latency of existing 4G/5G networks is still too high, more than 40ms, from the robot to the controller. Jitter in existing 4G/5G is still in order of milliseconds, and the existing accepted reliability of 4G is 99.99%. Therefore, simply applying existing 4G/5G systems to automation may not work in some strict cases.

The teachings of the disclosure solve one or more problems with existing system at least in part by providing a wireless alternative to cable system (e.g., PROFINET IO over Ethernet cabling) based on modified 4G and/or 5G. In particular, the teachings of the disclosure advantageously re-purposes the precise Physical Layer timing information in a cellular network and extends it to solve and/or meet the latency requirement of the automated manufacturing. For example, in one or more embodiments, the existing implementation of a network node (e.g., eNodeB/gNodeB) is reused where the configuration has been modified to shorten the path followed by the packets exchanged between the CLGC controllers and variable gain processors (VGP), meters and sensors of the automation device to help reduce the communication latency in support of isochronous real-time traffic. In one or more embodiments, the modified 4G and 5G system may provide for latency of less than or equal to 4ms in 4G or 1ms in 5G. Further, in one or more embodiments, a bridge component is provided that allows the cellular network to integrate with Industry Standard PROFINET devices.

Before describing in detail exemplary embodiments, it is noted that the embodiments reside primarily in combinations of apparatus components and processing steps related to automation control via a cellular network. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms automated device (if the automated device is a wireless automated device, for example) or wireless device or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or lowcomplexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

At last some of the teachings herein relate to wireless robot control in the manufacturing process that may require real time communications with low latency for isochronous traffic among robots, sensors and controllers, i.e., among wireless devices. PROFINET IRT is a wired technology based on Ethernet protocol and is used as a reference in the present disclosure, although the teaching described herein are equally applicable to other protocols.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

An indication generally may explicitly and/or implicitly indicate the information it represents and/or indicates. Implicit indication may for example be based on position and/or resource used for transmission. Explicit indication may for example be based on a parametrization with one or more parameters, and/or one or more index or indices, and/or one or more bit patterns representing the information. It may in particular be considered that control signaling as described herein, based on the utilized resource sequence, implicitly indicates the control signaling type.

Transmitting in downlink may pertain to transmission from the network or network node to the terminal. Transmitting in uplink may pertain to transmission from the terminal to the network or network node. Transmitting in sidelink may pertain to (direct) transmission from one terminal to another. Uplink, downlink and sidelink (e.g., sidelink transmission and reception) may be considered communication directions. In some variants, uplink and downlink may also be used to described wireless communication between network nodes, e.g. for wireless backhaul and/or relay communication and/or (wireless) network communication for example between base stations or similar network nodes, in particular communication terminating at such. It may be considered that backhaul and/or relay communication and/or network communication is implemented as a form of sidelink or uplink communication or similar thereto.

Data may refer to any kind of data, in particular any one of and/or any combination of control data or user data or automated device data or payload data. Control information (which may also be referred to as control data) may refer to data controlling and/or scheduling and/or pertaining to the process of data transmission and/or the network or terminal operation.

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

As used herein, controller may refer to a closed loop gain control (CLGC) or closed loop controller (CLC) controller.

As used herein, "automated device" may refer to an automated device that is connected by wireless connection to a network node (i.e., automated wireless device) or connected by a wired connection to a network node (i.e., automated wired device).

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

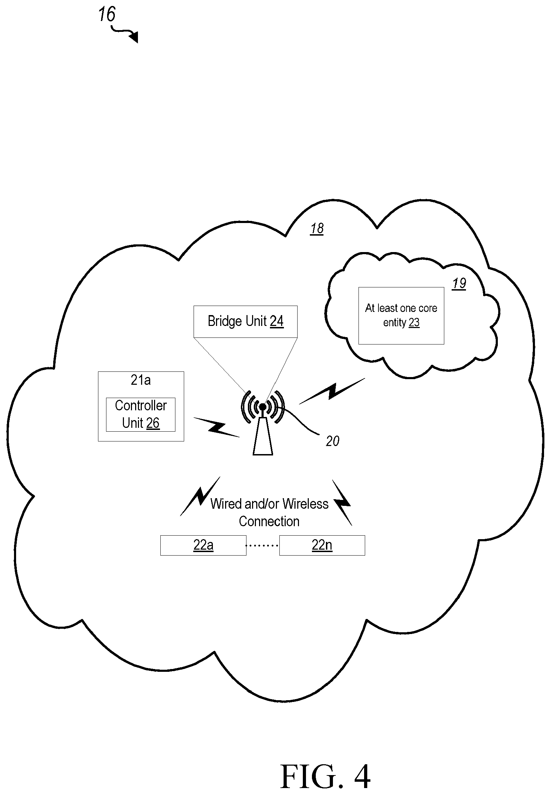

Referring now to the drawing figures, in which like elements are referred to by like reference numerals, there is shown in FIG. 4 a schematic diagram of a communication system 16, according to an embodiment, such as a 3GPP-type cellular network that may support standards such as LTE and/or NR (5G) and that may support other protocols as described herein, which comprises an access network 18, such as a radio access network, and a core network 19 that may include at least one core entity. The access network 18 comprises one or more network nodes 20, such as NBs, eNBs, gNBs or other types of wireless access points, each defining a corresponding coverage area. In one or more embodiments, network node 20 include bridge unit 24 that is configured to route control packets and/or other traffic to/from one or more of controller wireless device 21 and automated device 22 without having to transmit the control packets and other traffic to the core network 19, i.e., bypasses at least one core entity 23. In one or more embodiments, automated device 22 is an automated wired device that communicates with network node 20 via a wired connection, e.g., an Ethernet based wired connection. In one or more embodiments, automated wireless device 22 is an automated wireless device that communicates with network node 20 via a wireless connection, e.g., WiFi connection.

Network node 20 is connectable to the core network 19 over a wired or wireless connection. Access network 18 may include one or more controller wireless devices 21 that is configured to communication with network node 20. In one or more embodiments, controller wireless device 21 may include control unit 26 for performing one or more control functions for one or more automated devices 22. Access network 18 may include one or more automated devices 22a to 22n (collectively referred to as automated device 22).

Also, it is contemplated that controller wireless device 21 and/or one or more automated devices 22 can be in simultaneous communication and/or configured to separately communicate with more than one network node 20 and more than one type of network node 20. For example, controller wireless device 22 and/or one or more automated devices 22 can have dual connectivity with a network node 20 that supports LTE and the same or a different network node 20 that supports NR.

Core network 19 may include a MME 10, SGW 12 and Packet data network (PDN) GW 14 where serving SGW is configured to transport IP data traffic such as by routing incoming and outgoing data packets. However, while existing systems may continue to use the SGW to route IP packets between wireless devices 22, the teachings described herein advantageously bypass at least one core entity such as SGW 12 in core network 19 such as when routing packets between to/from one or more automated devices 22. PGW 14, SGW 12 and MME 10 are known in the art.

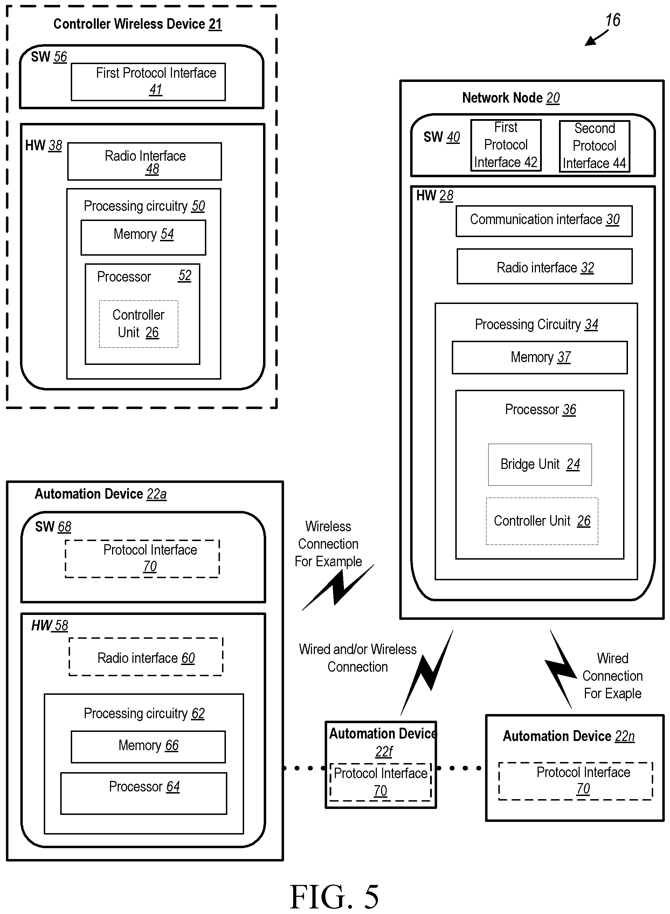

FIG. 5 is a diagram of some elements of FIG. 4 according to one or more embodiments of the disclosure. The communication system 16 further includes a network node 20 provided in a communication system 16 and including hardware 28 enabling it to communicate with the controller wireless device 21 and with the automated device 22. The hardware 28 may include a communication interface 30 for setting up and maintaining a wired or wireless connection with an interface of a different communication device of the communication system 16, as well as a radio interface 32 for setting up and maintaining at least a wireless connection with controller wireless device 21 and automated device 22. The radio interface 32 may be formed as or may include, for example, one or more RF transmitters, one or more RF receivers, and/or one or more RF transceivers. In one or more embodiments, the radio interface 32 is an air interface that provides radio based communication.

The communication interface 30 may be configured to facilitate a connection to core network 19 such as via a backhaul link such as an Ethernet based backhaul link as is known in the art. In the embodiment shown, the hardware 28 of the network node 20 further includes processing circuitry 34. The processing circuitry 34 may include a processor 36 and a memory 37. In particular, in addition to or instead of a processor, such as a central processing unit, and memory, the processing circuitry 34 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 36 may be configured to access (e.g., write to and/or read from) the memory 37, which may comprise any kind of volatile and/or non-volatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 20 further has software 40 stored internally in, for example, memory 37, or stored in external memory (e.g., database, storage array, network storage device, etc.) accessible by the network node 20 via an external connection. In one or more embodiments, software 40 is configured to provide a first protocol interface 42 and a second protocol interface 44 that allow for respective communication using respective protocols, as described herein.

The software 40 may be executable by the processing circuitry 34. The processing circuitry 34 may be configured to control any of the methods and/or processes described herein and/or to cause such methods, and/or processes to be performed, e.g., by network node 20. Processor 36 corresponds to one or more processors 36 for performing network node 20 functions described herein. The memory 37 is configured to store data, programmatic software code and/or other information described herein. In some embodiments, the software 40 may include instructions that, when executed by the processor 36 and/or processing circuitry 34, causes the processor 36 and/or processing circuitry 34 to perform the processes described herein with respect to network node 20. For example, processing circuitry 34 of the network node 20 may include bridge unit 24 configured to perform one or more network node 20 functions as described herein such as with respect to routing traffic to/from automated devices 22. In one or more embodiments, functionality of the controller wireless device 21 is provided by network node 20 such that processing circuitry 34 of the network node 20 may optionally include controller unit 26 configured to perform one or more network node 20 functions as described herein such as with respect to controlling automated devices 22.

The communication system 16 further includes the controller wireless device 21 already referred to. The controller wireless device 21 may have hardware 38 that may include a radio interface 48 configured to set up and maintain wireless connections with a network node 20 and/or automated device 22 via network node 20. The radio interface 48 may be formed as or may include, for example, one or more RF transmitters, one or more RF receivers, and/or one or more RF transceivers.

The hardware 38 of the controller wireless device 21 further includes processing circuitry 50. The processing circuitry 50 may include a processor 52 and memory 54. In particular, in addition to or instead of a processor, such as a central processing unit, and memory, the processing circuitry 50 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 52 may be configured to access (e.g., write to and/or read from) memory 54, which may comprise any kind of volatile and/or non-volatile memory, e.g., cache and/or buffer memory and/or RAM (Random Access Memory) and/or ROM (Read-Only Memory) and/or optical memory and/or EPROM (Erasable Programmable Read-Only Memory).

Thus, the wireless device 21 may further comprise software 56, which is stored in, for example, memory 54 at the controller wireless device 21, or stored in external memory (e.g., database, storage array, network storage device, etc.) accessible by the controller wireless device 21. The software 56 may be executable by the processing circuitry 50. The software 56 may include a first protocol interface that is configured to provide communication via a first protocol, among other protocols.

The processing circuitry 50 may be configured to control any of the methods and/or processes described herein and/or to cause such methods, and/or processes to be performed, e.g., by controller wireless device 21. The processor 52 corresponds to one or more processors 52 for performing controller wireless device 22 functions described herein. The controller wireless device 21 includes memory 54 that is configured to store data, programmatic software code and/or other information described herein. In some embodiments, the software 56 may include instructions that, when executed by the processor 52 and/or processing circuitry 50, causes the processor 52 and/or processing circuitry 50 to perform the processes described herein with respect to controller wireless device 21. For example, the processing circuitry 50 of the controller wireless device 21 may include a controller unit 26 configured to perform one or more controller wireless device 21 functions described herein such as with respect to controlling at least one automated device 22.

The communication system 16 further includes the automated device 22 already referred to. The automated device 22 may have hardware 58 that may include a radio interface 60 configured to set up and maintain wireless connections (e.g., 4G and/or 5G connections) with a network node 20 and/or controller wireless device 21 via network node 20. The radio interface 60 may be formed as or may include, for example, one or more RF transmitters, one or more RF receivers, and/or one or more RF transceivers.

The hardware 58 of the automated device 22 further includes processing circuitry 62. The processing circuitry 62 may include a processor 64 and memory 66. In particular, in addition to or instead of a processor, such as a central processing unit, and memory, the processing circuitry 62 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 64 may be configured to access (e.g., write to and/or read from) memory 66, which may comprise any kind of volatile and/or non-volatile memory, e.g., cache and/or buffer memory and/or RAM (Random Access Memory) and/or ROM (Read-Only Memory) and/or optical memory and/or EPROM (Erasable Programmable Read-Only Memory).

Thus, the automated device 22 may further comprise software 68, which is stored in, for example, memory 66 at the automated device 22 or stored in external memory (e.g., database, storage array, network storage device, etc.) accessible by the automated device 22. The software 68 may be executable by the processing circuitry 62. The software 68 may include a first protocol interface 70 that is configured to provide communication via a first protocol, among other protocols. In one or more embodiments, the protocol interface 70 is and/or includes a wired interface such as an Ethernet based interface that allows for wired communications to/from network node 20. In one or more embodiments, the protocol interface 70 is and/or includes a wireless interface such as a WiFi based interface that allows for wireless communications to/from network node 20. In one or more embodiments, radio interface 60 may provide wireless communications with network node 20 via 4G and/or 5G and/or 3GPP based standards. Hence, automated device 22 may include one or more of protocol interface 70 (i.e., wired and/or wireless interface) such as for PROFINET functionality and radio interface 60 (i.e., air interface) such as for 4G/5G functionality, depending on the type of automated device 22 configuration, i.e., automated device 22 may omit protocol interface 70 or radio interface 60 in some embodiments.

The processing circuitry 62 may be configured to control any of the methods and/or processes described herein and/or to cause such methods, and/or processes to be performed, e.g., by automated device 22. The processor 64 corresponds to one or more processors 64 for performing automated device 22 functions described herein. The automated device 22 includes memory 66 that is configured to store data, programmatic software code and/or other information described herein. In some embodiments, the software 68 may include instructions that, when executed by the processor 64 and/or processing circuitry 62, causes the processor 64 and/or processing circuitry 62 to perform the processes described herein with respect to automated device 22. Software 68 may include protocol interface 70 that may be configured to provide communication via a first protocol and/or second protocol via radio interface 60 as described herein.

In some embodiments, the inner workings of the network node 20, controller wireless device 21 and automated device 22 may be as shown in FIG. 5 and independently, the surrounding network topology may be that of FIG. 4.

Although FIGS. 4 and 5 show various "units" such as bridge unit 24, and controller unit 26 as being within a respective processor, it is contemplated that these units may be implemented such that a portion of the unit is stored in a corresponding memory within the processing circuitry. In other words, the units may be implemented in hardware or in a combination of hardware and software within the processing circuitry.

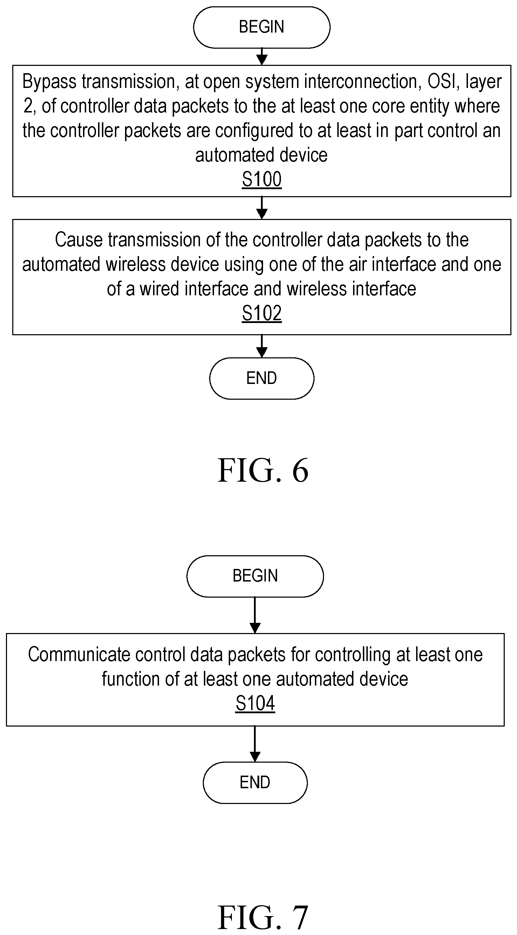

FIG. 6 is a flowchart of an exemplary process in a network node 20 according to one or more embodiments of the disclosure. One or more Blocks and/or functions performed by network node 20 may be performed by one or more elements of network node 20 such as by bridge unit 24 in processing circuitry 34, processor 36, radio interface 32, etc. In one or more embodiments, network node 20 such as via one or more of processing circuitry 34, processor 36, communication interface 30 and radio interface 32 is configured to bypass (Block S100) transmission, at open system interconnection, OSI, layer 2, of controller data packets to the at least one core entity 23 where the controller data packets are configured to at least in part control an automated device 22, as described herein. In one or more embodiments, network node 20 such as via one or more of processing circuitry 34, processor 36, communication interface 30 and radio interface 32 is configured to cause (Block S102) transmission of the controller data packets to the automated device 22 using one of the air interface (e.g., provided by radio interface 60) and one of the wired interface (e.g., Ethernet interface provided by protocol interface 70) and wireless interface (e.g., WiFi interface provided by protocol interface 70), as described herein.

According to one or more embodiments, the processing circuitry 34 is further configured to provide closed loop gain control, CLGC, for at least in part controlling the automated device 22 where the controller data packets are CLGC data packets. According to one or more embodiments, the air interface is further configured to receive the controller data packets from a controller wireless device 21 where the controller data packets are closed loop gain control, CLGC, data packets. According to one or more embodiments, the controller data packets are received from the controller wireless device 21 via a first protocol where the bypassing of the core entity 23 includes converting the controller data packets from the first protocol to a second protocol.

According to one or more embodiments, the first protocol is coarse and fine control protocol, CFCP, and the second protocol is an Ethernet based protocol. According to one or more embodiments, the processing circuitry 34 is further configured to at least one of: pre-allocate at least one slot to the controller wireless device21 and assign resources to the automated device 22 in the at least one slot until a predefined event occurs. According to one or more embodiments, predefined event is a termination of control to the automated device 22. According to one or more embodiments, the transmission of the controller data packets to the automated device 22 occurs using the air interface.

According to one or more embodiments, the transmission of the controller data packets to the automated device 22 occurs using the one of the wired interface and wireless interface that may be provided by protocol interface 70. According to one or more embodiments, the transmission of the controller data packets to the automated device 22 is an isochronous transmission. According to one or more embodiments, the at least one core entity 23 that is bypassed is at least a serving gateway, SGW 12. According to one or more embodiments, the protocol interface is a wired interface for an Ethernet based PROFINET protocol.

FIG. 7 is a flowchart of an exemplary process in a wireless device 22 according to one or more embodiments of the disclosure. One or more Blocks and/or functions performed by controller wireless device 21 may be performed by one or more elements of controller wireless device 21 such as by controller unit 26 in processing circuitry 50, processor 52, radio interface 48, etc. In one or more embodiments, controller wireless device 21 such as via one or more of processing circuitry 50, processor 52 and radio interface 48 is configured to communicate (Block S104) control data packets for controlling at least one function of at least one automated device 22.

Having described the general process flow of arrangements of the disclosure and having provided examples of hardware and software arrangements for implementing the processes and functions of the disclosure, the sections below provide details and examples of arrangements for automation control via a cellular network.

Embodiments herein provide automation control via a cellular network.

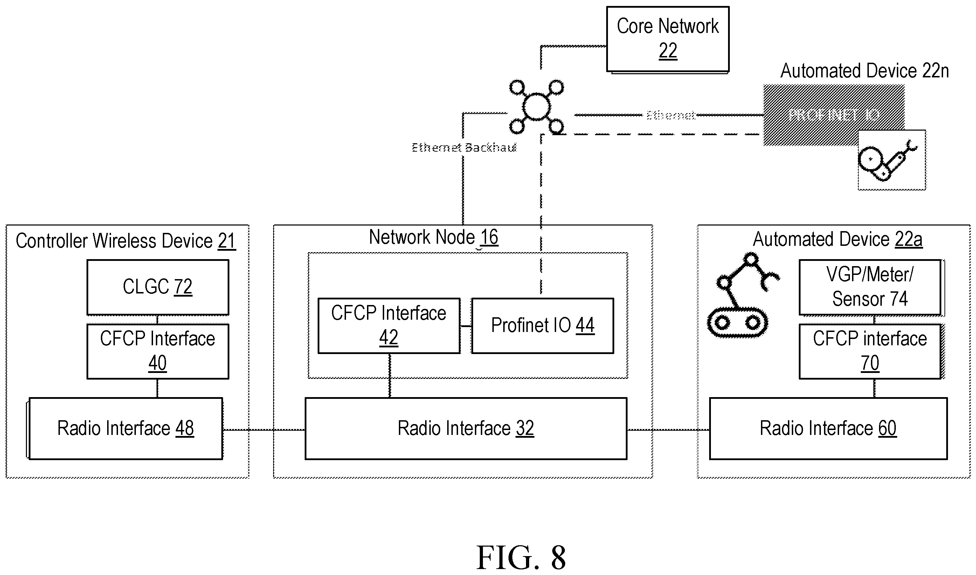

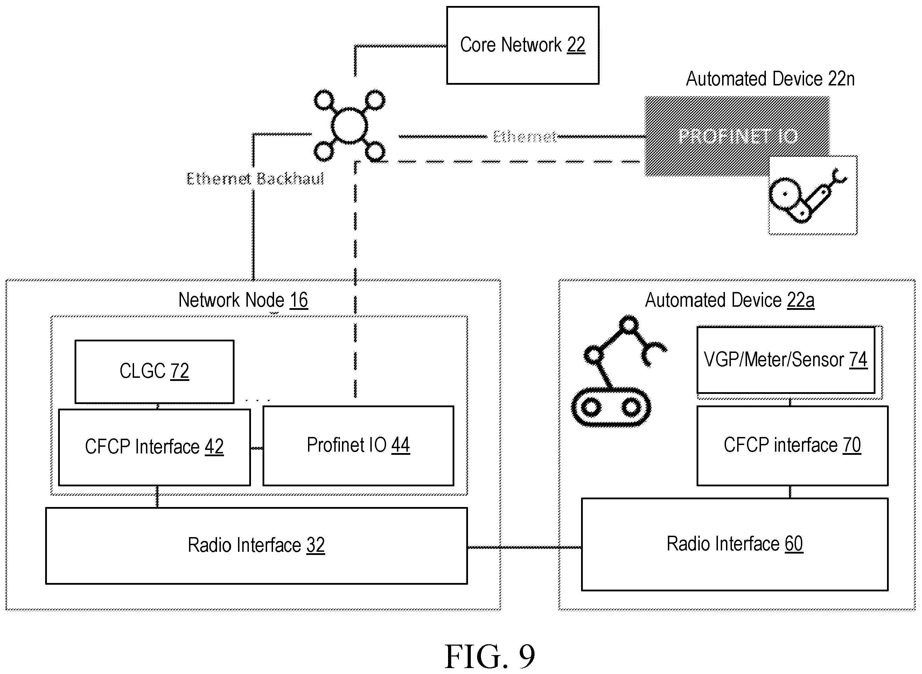

The teachings in the disclosure provide examples for providing Isochronous real-time communications in 4G/5G and PROFINET IO networks:
- Example 1: Isolated CLGC of controller wireless device 21 and PROFINET IO/CFCP Bridge that may be implemented by bridge unit 24. This example is illustrated in FIG. 8, a controller wireless device 21 running a CLGC application 72 (CLGC 72), which may be implemented by controller unit 26, connected to the 4G/5G network. In one or more embodiments, the CFCP interface may be implement by processing circuitry 50 and/or processing circuitry 62 for interconnection. In one or more embodiments, a separate network node 20 uses a bridge unit 24 to interconnect wireless devices 21 and/or 22 in the 4G/5G network with the wireless devices 22 in PROFINET IO, as described herein.
- Example 2: Integrated CLGC Controller and PROFINET IO/CFCP Bridge. This example is illustrated in FIG. 9 where the CLGC controller, i.e., controller unit 26, and the bridge unit 24 are implemented in the same entity, i.e., network node 20.

In particular, Example 1 includes controller wireless device 21 that includes CLGC 72, CFCP interface (i.e., first protocol interface 41) and radio interface 48. Network node 20 may include CFCP interface (i.e., first protocol interface 42), profinet IO (i.e., second protocol interface 44) and radio interface 32. Automated device 22a may include VGP/Meter/Sensor 74 and CFCP interface 70 (i.e., protocol interface 70) and radio interface 60. Automated device 22n may include similar components to automated device 22a except that CFCP interface 70 is replaced with profinet interface 70 (i.e., protocol interface 70.

These two examples are logically implemented on top of 4G/5G and PROFINET IO network layers to provide low latency, small jitter and high reliability, beyond what is supported in existing 4G and 5G systems, thereby improving support for synchronous real time communications and isochronous real time transmission. One or more advantages of the disclosure such as via Example 1 and/or Example 2 may be implemented via one or more of:
- Logical Bridge, i.e., bridge unit 24
- Allocation mechanism for 4G and 5G resource blocks.
- Persistent scheduling for uplink configured by default.
- Coarse and Fine Control Protocol (CFCP).

### Example 1: Isolated CLGC Controller and PROFINET IO/CFCP Bridge

Example 1 may provide routing improvement over known solutions.

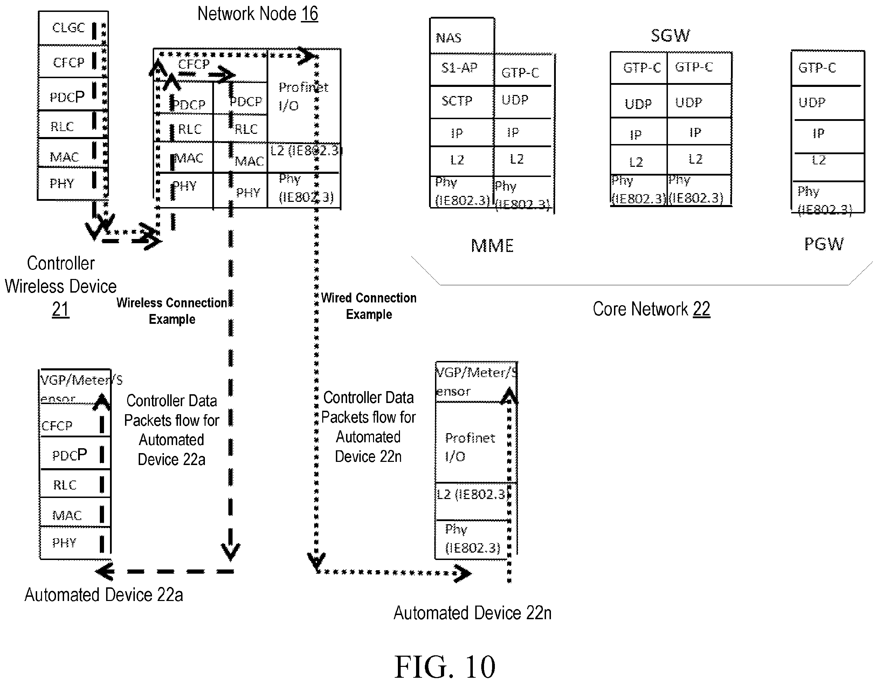

While FIG. 3 illustrates what would be the path followed by a CLGC data packet, i.e., controller data packets, if the CLGC system was implemented using existing IP over a 4G network, FIG. 10 shows the modified path due to the implementation of bridge unit 24 that provides PROFINET IO/CFCP Bridge. In one or more embodiments, automated device 22a is an automated wireless device while automated device 22n is an automated wired device. One difference from FIG. 3 is that the CLGC/controller data packet in FIG. 10 is forwarded from the controller wireless device 21 to the VGP, meter or sensor via the bridge unit 24 at Layer 2 without having to be processed and/or routed by the SGW 12. This bypassing of the SGW 12 and/or other core entities 23 in core network 19 advantageously avoids the two-way latency of the path from the network node to the at least SGW 12 as at least the SGW 12 is not part of the latency of the path controller-to-VGP/meter/sensor anymore.

Another difference between the configuration of FIG. 3 and FIG. 10 is that the configuration of FIG. 10 removes the latency caused by processing of the TCP/IP stack. Therefore, the total latency of FIG. 10 is smaller by, for example, 12-16ms, when compared to the total latency of the CLGC system of FIG. 3 that uses TCP/IP over LTE. Also, another difference between the configuration of FIG. 3 and FIG. 10 is that the interoperability between CFCP wireless devices, i.e., automated devices 22, from the 4G/5G network to PROFINET IO wireless devices, i.e., automated device 22, in the Ethernet network according to the teachings of the disclosure is achieved at Open Systems Interconnection (OSI) Layer 2, which reduces the latency of CFCP packets from/to PROFINET IO networks if TCP/IP stack was used.

### Example 2: Integrated CLGC Controller with PROFINET IO/CFCP Bridge

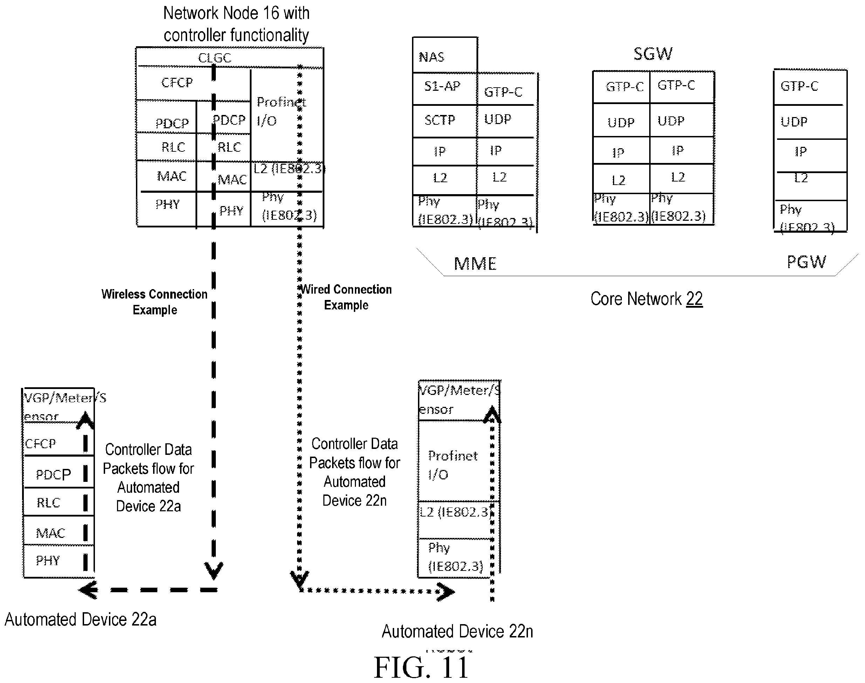

Example 2 helps provide routing improvement as described in Example 1, but Example 2 merges the functions of controller wireless device 21 and bridge unit 24, which may correspond to network node 20 implemented both controller unit 26 and bridge unit 24. In particular, as shown by FIG. 11, in this configuration, the CLGC of controller wireless device 21 and the PROFINET IO/CFCP bridge provided by bridge unit 24 resides in the same device also known as Controller+Bridge that may be implemented by network node 20:
▪ The CLGC data packet is forwarded from the network node 20 to the VGP, meter or sensor in the robot wireless device, i.e., automated device 22, without going up to the SGW 12, i.e., bypassing SGW 12.
▪ Similar to Example 1, the two-way latency of the path from the network node 20 to SGW 12 characteristic of a 4G/5G network with TCP/IP (as described with respect to FIG. 3), is not part of the network node 20-to-automated device 22 path, i.e., controller to VGP/meter/sensor.
▪ Similar to Example 1, the latency due to processing of TCP/IP stack, which is a characteristic of a 4G/5G network with TCP/IP (as described with respect to FIG. 3) is removed or does not occur in Example 2.
▪ The path between the CLGC application of the network node 20 and automated device 22 (VGP/Meter/Sensor) is reduced by, for example, half. The latency of Example 2 may be in order of 4ms that is smaller when compared to Example 1.
▪ The interoperability between 4G/5G and PROFINET IO occurs at OSI layer 2, which reduces the latency of CFCP packets from/to PROFINET IO networks. *Mechanisms to Improve Synchronous Real-time Transmissions and*

### Isochronous Real- Time Transmissions

### Bridge unit 24

Bridge unit 24 between 4G/5G and PROFINET IO advantageously allows interoperability between wireless devices 22 connected in the two networks. In one or more embodiments, the bridge unit 24 is configured to translate PROFINET IO traffic, circulating in the Ethernet network, into/from packets circulating in the 4G/5G network such into/from a Coarse and Fine Control Protocol (CFCP). Therefore, the following interoperability with PROFINET IO may be provided:
- Interoperability between CFCP protocol on 4G/5G network and PROFINET IO frames/traffic in the Ethernet network; and/or
- Interconnection between CLGC applications and VGP, meters and sensors regardless of the network (PROFINET IO they are connected).

CFCP is a protocol that may operate in 5G RLCC or 5G URLLC interfaces to support CLGC applications. In one or more embodiments, CFCP may be configured to operate in 4G and 5G while 5G RLCC and/or 5G URLLC services are not available.

### Data Flow of CFCP over PDCP in one or more embodiments

FIGS. 10 and 11 also show the data flow of a CFCP packet from the controller wireless device 21/network node 20 to automated device 22. At transmission, the CLGC application at the controller wireless device 21 and/or network node 20 generates the CFCP packets with a complete payload, but the header partially filled. Then, the CFCP packet is duplicated (if need) and CFCP sequence number is added (the same sequence number may also be added to the possible duplicate CFCP packet), as a result, the wireless device destination is able to detect duplicate CFCP packets.

Using the destination association identifier (ID), the wireless device 21 and/or 22 and the PDCP entity for the destination wireless device are recovered such as by processing circuitry 34 or 62 from a CFCP association-id mapping table. A PDCP header is added to the CFCP packets to form a PDCP frame.

The PDCP frame may undergo one or more procedures that allow the radio interface 60/48 at wireless device 22/21 to detect duplicate or lost PDCP packets and to reorder the packets. This numbering procedure may be used during handover and allows retransmission requests for PDCP lost packets. In one or more embodiments, an un-acknowledgement mode is used for the RLC layer. Since the PDCP payload is no more an IP packet, but rather a CFCP packet, the payload may not be subjected to the ROHC header compression to reduce the relative weight of headers. Thus, the CFCP may already be compacted such that ROHC techniques may not compress the CFCP packet as much the IP packet is compressed with ROCH techniques.

In one or more embodiments, the CFCP packet is encrypted using the C_{KeNB-UP} key. The encrypted CFCP packet may be encapsulated by the PDCP header to form the PDCP frame that may be transmitted to the RLC layer.

After receiving the PDCP frames from the RLC layer at the controller wireless device 21 via radio interface 48 or network node 20 via radio interface 32, the PDCP header is removed. Then the CFCP packet is decrypted where the IP decompression step from LTE is no longer applicable. In sequence, duplicate CFCP packets are removed and the CFCP packets are delivered in sequence. Duplicates CFCP packets are combined into only one packet and delivered to CLGC application.

The PDCP feedback control message checks the header compression procedure. The PDCP Status Report control message allows recovery of the frames lost during the handover.

While FIGS. 10 and 11 show the path of controller data packets to automated device 22a and 22n, the path from automated devices 22a and 22n to network node 20 and/or wireless device 21 is the same except it is in the reverse logical direction.

### CFCP Association-ID Mapping Table

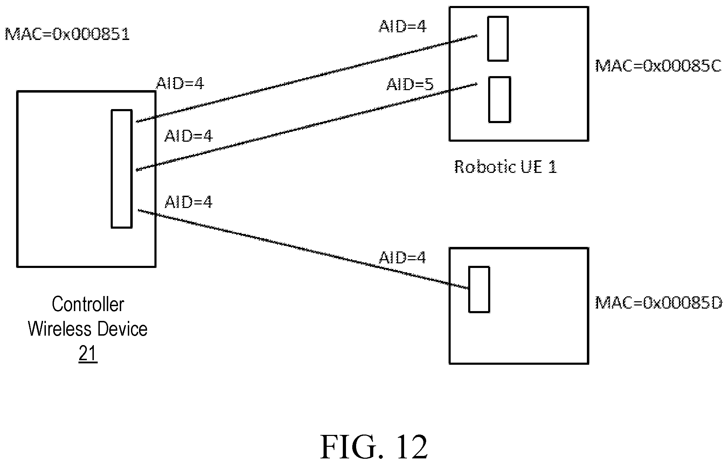

Table 3 shows an example of the content of the CFCP association-ID mapping table corresponding to the devices in FIG. 12.

| **DR Bearer** | **Destination CFCP Association Id** | **Source CFCP Association Id** | **Destination MAC Address** | **Source MAC Address** |
|---|---|---|---|---|
| 3 | 4 | 4 | 0x00085C | 0x000851 |
| 4 | 4 | 5 | 0x00085C | 0x000851 |
| 5 | 4 | 4 | 0x00085D | 0x000851 |

In one or more embodiments, this is the database where the bridge unit 24 finds the destination to forward CFCP packets when network node 20 such as via radio interface 32 receives the packets from the wireless devices and/or wired devices (PROFINET IO devices may be associated to MAC addresses). Table 3 shows an example of the content of the address mapping table for the configuration on FIG. 12.

### Allocation mechanism for 4G and 5G resource blocks

### The 4G Frame Structure

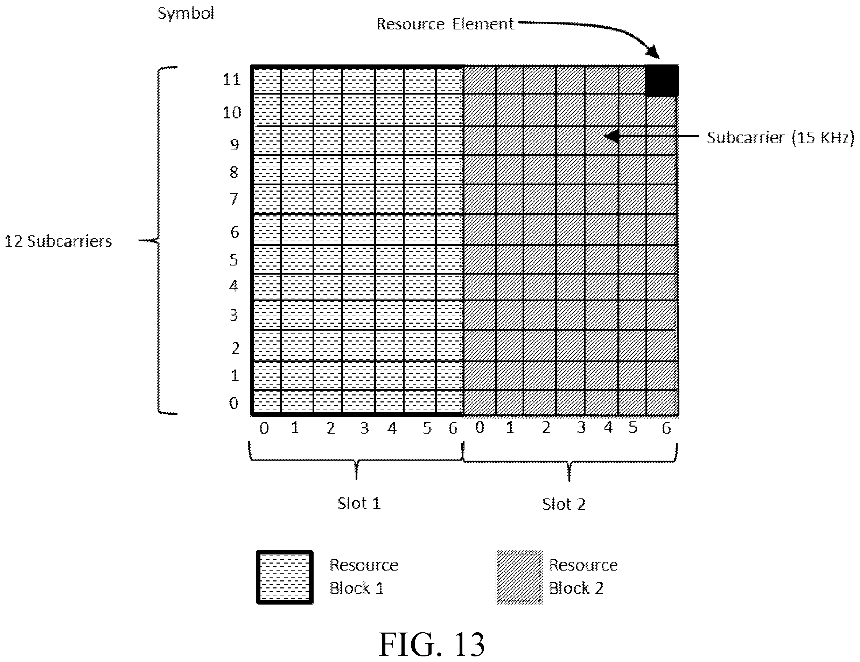

FIG. 13 is a block diagram that illustrates an example of the organization of LTE modulation in the frequency and time domains. In 4G, the basic structure of modulation is the Resource Element which is one 15 kHz subcarrier by one symbol. Resource Elements aggregate into Resource Blocks. Twelve consecutive subcarriers in the frequency domain and six or seven symbols in the time domain form each Resource Block depending on the Cyclic Prefix (CP) in use. A time slot is 0.5 ms and contains six or seven symbols depending on the CP in use, that is, a resource block occupies one slot in time domain.

### Problem with Existing 4G Resource Block Allocation

Resource block allocation is the process of assigning resource blocks for the downlink and uplink channel for each wireless device 21/22 in each Transmission Time Interval (TTI). A TTI is two consecutive slots of 0.5ms, that is, TTI=1ms. The resource block allocator can assign resource blocks to the wireless device 21/22 that might belong to two different slots of a subframe corresponding to the same TTI. For example, in FIG. 13, a resource block in slot 1 and another resource block in slot 2 may be allocated to the same wireless device 21/22 because these slots belong to the same TTI. In another time, two resource blocks at the same slot may be allocated. These variations on the allocations may result in jitter of 0.5ms since, in the first allocation, the two blocks were transmitted and, in 2 slots and in the second allocation, only one slot is transmitted.

### Modified Resource Block Allocation

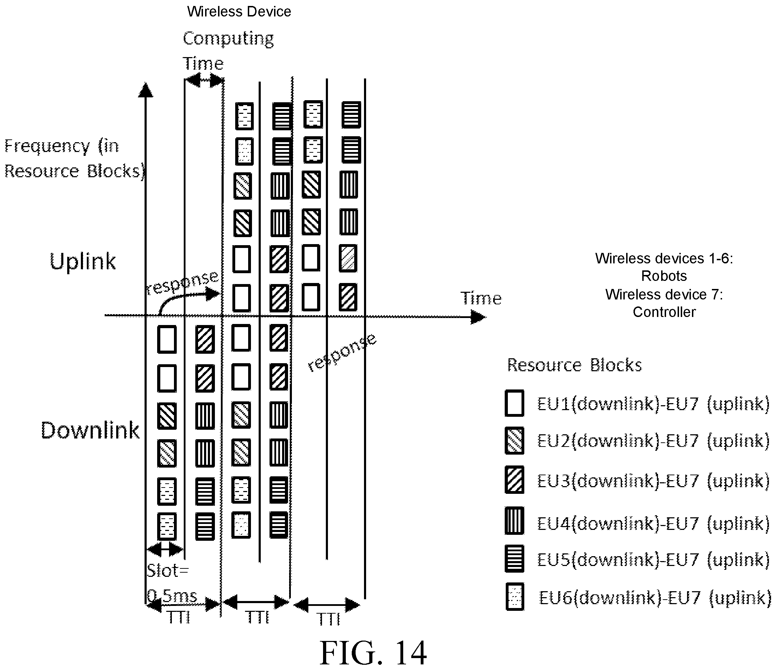

In one or more embodiments, the modified resource allocator that may be implemented at network node 20 such as via processing circuitry 34 or that may be part of bridge unit 24 may always assign resource blocks for a wireless device 21/22 in the same slot for downlink or uplink. Thus, the resource allocator divides the bandwidth of a time slot into frequency slots and assigns the frequency slots to a wireless device 21/22. FIG. 14 is a diagram illustrating an example of how resource blocks are allocated, such as by processing circuitry 34 of network node 20, equally to wireless devices 21/22 using the modified resource allocation. In one or more embodiments, this modified resource block allocation configuration helps ensure that the time gaps of a request message and the response is the same or synchronized for the same automated device 22. In one or more embodiments, the time gap may be greater than 0.5ms but less than 1ms. 3GPP 4G and 5G communication standards do not guarantee such a time gap.

The characteristics of the wireless device's traffic may not change over time, hence the allocation of the resource blocks to wireless device 21/22 may static for a predefined period of time that may, for example, only change if the wireless device application stops communicating.

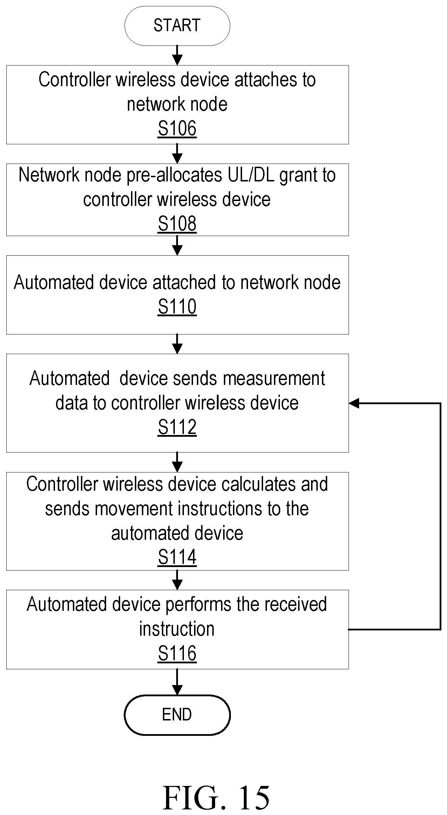

FIG. 15 is a flow diagram of an example process for the pre-allocation of resources of Example 1 according to one or more embodiments of the disclosure. Controller wireless device 21 such as via processing circuitry 50 and/or radio interface 48 is configured to attach (Block S106) to network node 20, as described herein. Network node 20 such as via processing circuitry 34 and/or bridge unit 24 is configured to pre-allocate (Block S108) UL/DL grant to controller wireless device 21, as described herein. Automated device 22 such as via processing circuitry 62 and/or radio interface 60 is configured to attach (Block S110) to network node 20, as described herein. Automated device 22 such as via radio interface 60 is configured to send (Block S112) measurement data to controller wireless device, as described herein. Controller wireless device 21 such as via processing circuitry 50 and/or controller unit 26 is configured to calculates (Block S114) and sends movement instructions to automated device 22, as described herein. Automated device 22 such as via processing circuitry 62 is configured to perform (Block S116) the received instructions, as described herein. Automated device 22 such as via processing circuitry 62 may then perform the function of Block S112.

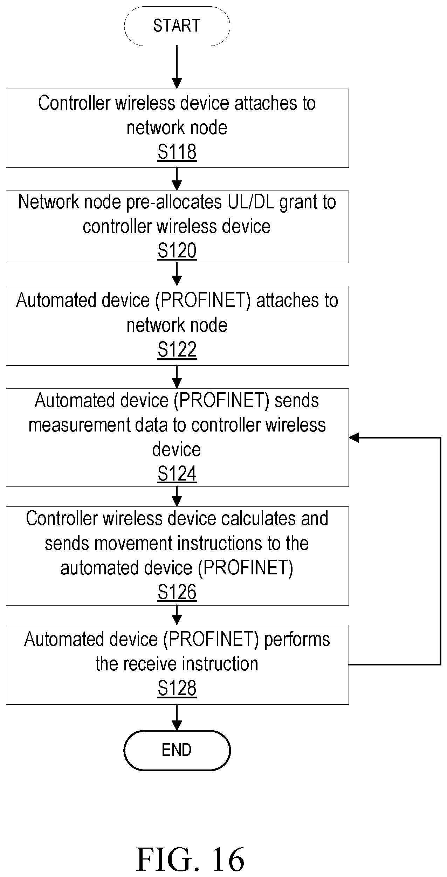

FIG. 16 is a flow diagram of another example process for the pre-allocation of resources of Example 1 according to the one or more embodiments of the disclosure. Controller wireless device 21 such as via processing circuitry 50 and/or radio interface 48 is configured to attach (Block S118) to network node, as described herein. Network node 20 such as via processing circuitry 34 and/or bridge unit 24 is configured to pre-allocate (Block S120) UL/DL grant to controller wireless device 21, as described herein. Automated device implementing PROFINET ("automated device 22 (PROFINET)") is configured to, via processing circuitry 62 and/or radio interface 60, attach (Block S122) to network node 20, as described herein. Automated device 22 (PROFINET) such as via processing circuitry 62 and/or radio interface 60 is configured to send (Block S124) measurement data to controller wireless device 21, as described herein. Controller wireless device 21 such as processing circuitry 50 and/or radio interface 48 and/or controller unit 26 is configured to calculate (Block S126) and sends movement instructions to the automated device 22 (PROFINET), as described herein. In one or more embodiments, automated device 22 (PROFINET) may then perform the functions of Block S124.

Example 2 with the integrated CLGC controller has the same pre-allocation process as described above with respect to FIGS. 15 and 16 except that the CLGC controller does not need to be attached since the controller is integrated in the network node.

### Persistent Scheduling

Different from existing 4G/5G, both configurations in Example 1 and Example 2 may have the 4G/5G persistent scheduling configured by default for the wireless devices such as via processing circuitry 34 and/or bridge unit 24. Therefore, automated devices 22 may always have grant to start sending data via radio interface 60 to the controller wireless device 21. This persistent scheduling configuration helps avoid the uplink latency due to the time the wireless device 21/22 may have to wait for when receiving a scheduling grant from the network node 20 in the downlink. This behavior is the same that is adopted for VoLTE transmissions in 4G.

### Coarse and Fine Control Protocol (CFCP)

The Coarse and Fine Control Protocol (CFCP) is a peer-to-peer client/server protocol that may be an application layer transport protocol designed at least in part to transport packet data from/to wireless devices 22 controlled by the CLGC 72 of controller wireless device 22 to/from the CLGC 72 of the controller wireless device 21:
- VGP: Variable Gain Processor is part of a wireless device 22 that receives commands from the CLGC of controller wireless device 21 and modifies at least one property of the manufacturing process to adjust the output of the automated device 22.
- Meters are sensors of an automated device 22 that may be responsible for taking a sample of the manufacturing process for output as feedback to the CLGC of controller wireless device 21.
- Sensors may correspond to one or more sensors that sample some properties of the manufacturing process (not the output) or the environment around the wireless device and feedback the sampled properties to the CLGC of controller wireless device 21.

### Requirements of CFCP

The requirements of the CFCP may include one or more of the following:
- Small packets for Real-Time Transmissions: CFCP packets for synchronous real-time and isochronous real-time transmissions may be small such as to fit in several 4G/5G resources blocks without having to spawn over several 4G/5G time slots, as described in the modified resource block allocation section herein.
- Option to duplicate packets: Since the reliability requirements of IRT transmissions are high, duplicating packets is a technique that can be used to increase the reliability of the network. Duplicating packets may be performed automatically by the CFCP layer or activated by the CLGC of controller wireless device 21 or network node 20.
- Support for negotiation of capabilities between devices and the controller wireless device 21 or network node 20.
- Agnostic to the supporting network.

### Small Packets for Real-time Transmission

The CFCP packet may use on average two 4G resource blocks. The CFCP packet size may depend on one or more of the following:
- CFCP packets for non-real time transmission: These packets are used for capability negotiation and association negotiation. There may be no restriction to the size of the CFCP packet.
- CFCP packet(s) for synchronous real time transmission: These packets are used for synchronous real time transmissions. These packets may fit in two LTE resource blocks, on average, for example.
- CFCP packets for isochronous real time transmission: These packets may be used for isochronous real time transmissions. These packets may fit in two LTE resource blocks, on average, for example.

### Number of Physical Resource Block Calculation for Real time

### Transmissions

Assumptions:
- LTE System bandwidth: 20 MHz (100 PRB)
- Duplex Mode: FDD
- MIMO Mode: 2×2
- Time Cycle: 1ms
- Transmission: CLGC controller generates about 200 bits of data every 1ms.

Considering a CLGC of controller wireless device 21 generating a packet whose total size is 300 bits every 1 ms. This packet includes a CFCP header and payload and any headers included by 4G/5G layers such as PDCP, RLC and MAC.

A physical resource block (PRB) in 4G has 12 sub carrier and 14 symbols (normal CP) over 1 ms duration, or 12*14=168 resource elements (REs). Some of REs are occupied by control symbols (i.e. in the physical downlink control channel (PDCCH)) and reference symbols (RS), which provides about 120 REs available for data transmission.

The 4G downlink modulation scheme supports QPSK, 16 QAM and 64 QAM for physical downlink shared channel (PDSCH). Thus, each symbol can carry 2 bits, 4 bits or 6 bits based on the modulation adopted. Some of these bits are used for data and some for error control bits, where modulation and coding rate is shown in Table 4. Consequently, the number of resource blocks required for CFCP packets depends on what modulation is applied which depends on the radio condition of the wireless device. The wireless device reports RF conditions with Channel Quality Indicator (CQI) to the network node 20 and using this report the network node 20 decides the modulation for particular resource block. The CQI report range is 0-15 where 15 is the best channel condition. Table 4 details the 4G modulation scheme.

**Table 4**

| CQI Index | Modulation | code rate x 1024 | Efficiency |
|---|---|---|---|
| 0 | out of range | | |
| 1 | QPSK | 78 | 0.1523 |
| 2 | QPSK | 120 | 0.2344 |
| 3 | QPSK | 193 | 0.377 |
| 4 | QPSK | 308 | 0.6016 |
| 5 | QPSK | 449 | 0.877 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

Considering three examples: CQI 15, CQI 7 CQI 1:
- The wireless device 21/22 reports CQI 15: the network node 20 can use 64QAM modulation and a code rate of 948/1024 = 0.926 is applied. Thus, each RE holds 6 x 0.926 = 5.55 data bits on average. Taken this value into consideration and the 120 resource elements per PRB calculated previously, a single PRB can carry 120 x 5.55 = 666 data bits. Since the packet size considered is 300 bits, a PRB can carry two CFCP packets.
- The wireless device 21/22 reports CQI 7: the network node 20 can use 16QAM modulation and a 378/1024 = 0.369 coding rate, resulting in 4 x 0.369 x 120 = 177 data bits. Since the maximum CFCP packet size considered is 200 bits, a PRB can carry three CFCP packets such that, for example, for 300 bits, two PRBs may be used to carry the CFCP packets.
- The wireless device 21/22 reports CQI 1: the network node 20 can use QPSK modulation and a 78/1024 = 0.076 coding rate, supporting 2 x 0.076 x 120 = 18 data bits per PRB. So, to transmit 300 bits of the packet carry CFCP data, about 16 PRBs are necessary.

### Packet Duplication

The reliability of existing 4G does not match the 99.9999 % reliability considered for the PROFINET IO requirements. 5G's URLLC services might match this requirement when implemented. Therefore, to increase the reliability, CFCP protocol can optionally duplicate the CFCP packet, sending it to the 4G interface or 5G interface. This can be performed when the CFCP layer at the network node 20, for example, detects that the modulation scheme chosen by the 4G layer is of a QCI value below a certain threshold such as, for example, QCI 7. Optionally, the CLGC of controller wireless device 21 or network node 20 can request a duplication of the packet itself in one or more situations.

### Negotiation of Device Capabilities

Capabilities for configuration data is exchanged between the controller wireless device 21 or network node 20 and the automated devices 22 to set up the properties of CFCP communication between the two devices (e.g., two automated devices 22). The capabilities can be divided in these categories:
- **Device support capabilities:** These capabilities may apply to one or more wireless devices 21/22.
- **Closed Loop Gain Control Capabilities:** These capabilities may specify the characteristics of the robot fine control, such as controller type, priorities and meters.
- **VGP:** These capabilities may specify the characteristics of the VGP.
- **Meter and Sensor Capabilities:** These capabilities may specify the characteristics of the robot meters or environmental sensors.
- **Synchronization Capabilities:** These capabilities may specify the synchronization characteristics supported by the automated device 22 control elements.

### Agnostic to the Supporting Network Stack

Although CFCP may be designed to target 4G and 5G networks, CFCP may be independent of the protocol stack used to transport a CFCP packet. CFCP may be used as a UDP transport protocol, 4G/5G PDCP transport or Ethernet. Indeed, CFCP has an adaptation sublayer which is responsible for adapting and delivering the CFCP association requirements. An adaptation sublayer specification for 4G/5G PDCP is described herein. Other transport protocols may follow the teachings herein.

Example 3 may be implemented when the requirement described herein are relaxed or increased in the order of millisecond(s).

The 4G/5G network node such as network node 20 may announce such as via radio interface 32 to the network via its broadcast channel. For example, in the 4G LTE, SIB16 provides UTC in 3GPP release 11 and later. SIB16 may have an accuracy of 10 ms which is not being used in an automated manufacturing environment; therefore, the teachings described herein can be augmented with the broadcast channel modification. This example has a low complexity because this capability is already in place for wireless device, in other words, little to no network node modification may be required. However, the trade-off may be lower granularity when compared to the other examples described herein such as Example 1 and Example 2.

### timeInfoUTC

Coordinated Universal Time corresponds to the SFN boundary at or immediately after the ending boundary of the SI-window in which System Information Block (SIB) Type16 is transmitted. The field counts the number of UTC seconds in 10 ms units since 00:00:00 on the Gregorian calendar date 1 January, 1900 (midnight between Sunday, December 31, 1899 and Monday, January 1, 1900), including leap seconds and other additions prior to 1972. Further, in one or more embodiments, this field is excluded when estimating changes in system information, i.e., changes of timeInfoUTC may not result in system information change notifications nor in a modification of system Info Value Tag in SIB1.

### Cloud implementation

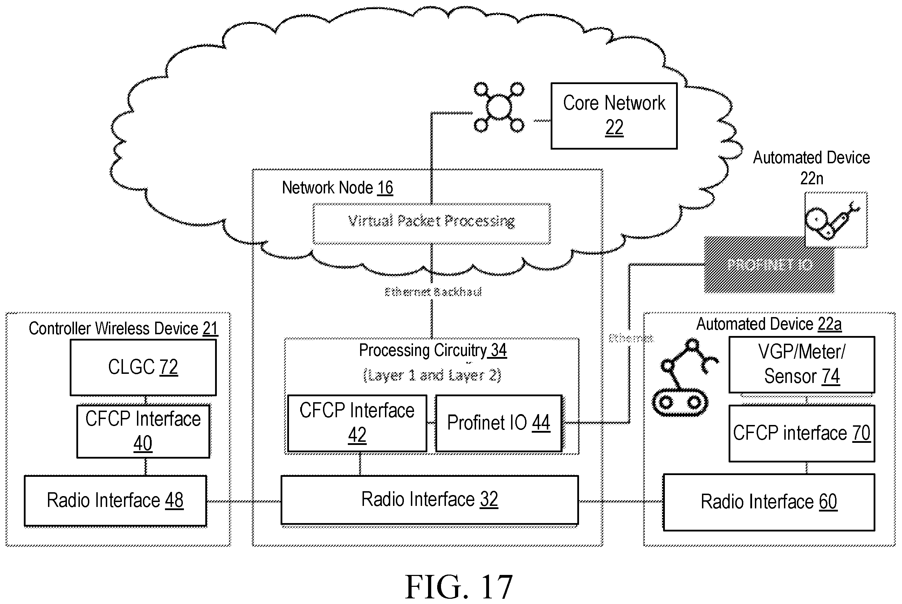

FIG. 17 is a block diagram of one example of a cloud implementation according to one or more embodiments of the disclosure. In particular, at least a portion of the functionality of the network node may be implemented in the cloud environment.

Therefore, the teachings of the disclosure advantageously apply at least to 4G and/or 5G technology to help solve the mobility issues and stringent timing requirements of an automated industrial robotics system. For example, the wireless cellular system provides the mobility according to the teachings of the invention where the stringent timing requirements for an automation environment are met with in party by applying the following in a cellular network:
*extracting* the precise periodic timing in a cellular network and applying that to an automated manufacturing equipment, so that an isochronous requirement and predictability for automation environments is met; and
*intercepting and bridging the signal at Layer 2 with, for example, pre-allocated uplink and downlink grants, such as to allow real-time requirement(s) of automation environments to be met.*

In one or more embodiments, a new system block CLGC Engine that may be provided by controller unit 26, for example, is introduced to mitigate signal delay latency.

In other words, the teaching of the disclosure advantageously re-purposes the cellular timing subsystem and modifies the existing cellular configuration for automated robotics control. Further, one or more embodiments of the disclosure advantageously provide one or more of:
- Wired Elimination
- Wireless cellular networks may be easier and/or faster to install than wired networks. Further, wireless infrastructure may be more scalable. Cellular networks have scheduler(s) to manage the resources efficiently.
   - Extension of Closed Loop Gain Control to Mobile Robots
   - Mobile Robots can be controlled remotely from controllers implementing CLGC.
   - Interoperability between 4G/5G and PROFINET IO Networks
   - A Bridge between the PROFINET IO (and/or other protocols used for automation) and the network node is provided. Nodes in 4G/5G can communicate with PROFINET I/O nodes and vice-versa.
   - May at least in part simplify or reduce the path(s) and/or processes used in the cellular network as described herein.
   - The teachings described herein are based on the network node and may not require a full EPC/5G Core for end-to-end connectivity. For a private cellular network without the need of full external Internet connectivity, this allows an option of a simplified deployment.

| Abbreviations | Explanation |
|---|---|
| 3GPP | 3rd Generation Partnership Project |
| CFCP | Coarse and Fine Control Protocol |
| CIP | Common Industrial Protocol |
| CLGC | Closed Loop Gain Control |
| CP | Cyclic Prefix |
| CQI | Channel Quality Indicator |
| DL | Downlink |
| DWPI | Derwent World Patents Index |
| EPC | Evolved Packet Core |
| ETSI | European Telecommunications Standard Institute |
| GTP | GPRS Tunneling Protocol |
| HMI | Human Machine Interface |
| I4.0 | Industry 4.0 |
| ISO | International Organization for Standardization |
| IEEE | Institute of Electrical and Electronics Engineers |
| IP | Internet Protocol |
| IRT | Isochronous Real-Time |
| MAC | Medium Access Control |
| PDCP | Packet Data Convergence Protocol |
| PID | Proportional Integral Derivative |
| PRB | Physical Resource Block |
| PUCCH | Physical Uplink Control Channel |
| QCI | QoS Class Indicator |
| QoS | Quality of Service |
| QAM | Quadrature Amplitude Modulation |
| QPSK | Quadrature Phase Shift Keying |
| RB | Resource Block |
| RE | Resource Element |
| RLC | Radio Link Control |
| RS | Reference Symbol |
| RT | Real-Time |
| SCTP | Stream Control Transmission Protocol |
| SFN | System Frame Number |
| SIB | System Information Block |
| SR | Scheduling Request |
| TCP | Transmission Control Protocol |
| UE | User Equipment |
| URLLC | Ultra-Reliable Low-Latency Communication |
| UTC | Coordinated Universal Time |
| VGP | Variable Gain Process |

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

## Claims

1. A method implemented by a network node (20), **characterized in** the network node (20) comprising a bridge unit (24) and configured to communicate with at least one core entity (23) in a core network (19) and at least one automated device (22), the method comprising:
forwarding (S100), at open system interconnection, OSI, layer 2, controller data packets received from a controller wireless device (21) via a radio interface (32) to an automated device (22) via the bridge unit (24) without transmitting the controller data packets to the core network in order to bypass the at least one core entity (23), the controller packets configured to at least in part control the automated device (22); and
causing (S102) transmission of the controller data packets to the automated device (22) using one of at least one of the radio interface and one of a wired interface and wireless interface.

2. The method of Claim 1, further comprising providing closed loop gain control, CLGC, for at least in part controlling the automated device (22), the controller data packets being CLGC data packets.

3. The method of Claim 1, further comprising receiving, via the radio interface, the controller data packets from the controller wireless device (21), the controller data packets being closed loop gain control, CLGC, data packets.

4. The method of Claim 3, wherein the controller data packets are received from the controller wireless device (21) via a first protocol; and
the bypassing of the at least one core entity (23) includes converting the controller data packets from the first protocol to a second protocol.

5. The method of Claim 4, wherein the first protocol is coarse and fine control protocol, CFCP, and the second protocol is an Ethernet based protocol.

6. The method of any one of Claims 3 to 5, further comprising at least one of:
pre-allocating at least one slot to the controller wireless device (21); and
assigning resources to the automated device (22) in the at least one slot until a predefined event occurs.

7. The method of Claim 6, wherein the predefined event is a termination of control to the automated device (22).

8. The method of any one of Claims 1 to 7, wherein the transmission of the controller data packets to the automated device (22) occurs using the radio interface.

9. The method of any one of Claims 1 to 7, wherein the transmission of the controller data packets to the automated device (22) occurs using the one of the wired interface and wireless interface.

10. The method of any one of Claims 1 to 9, wherein the transmission of the controller data packets to the automated device (22) is an isochronous transmission.

11. The method of any one of Claims 1 to 10, wherein the at least one core entity (23) that is bypassed is at least a serving gateway, SGW (12).

12. The method of any one of Claims 1 to 11, wherein the one of the wired interface and wireless interface is an interface for an Ethernet based PROFINET protocol.

13. A computer-readable medium (37) comprising code portions which, when executed on a processor (36) of a network node (20), configure the network node to perform all the steps of the method according to any one of the preceding method claims.

14. A network node (20) configured to communicate with at least one core entity (23) in a core network (19) and at least one automated device (22), the network node (20) comprising:
a radio interface (32) and one of a wired interface and wireless interface; and **characterized in** the network node (20) further comprising
processing circuitry (34) comprising a bridge unit (24), the processing circuit being configured to:
forward, at open system interconnection, OSI, layer 2, controller data packets received from a controller wireless device (21) via the radio interface (32) to an automated device (22) via the bridge unit (24) without transmitting the controller data packets to the core network in order to bypass the at least one core entity, the controller packets configured to at least in part control the automated device (22); and
cause transmission of the controller data packets to the automated device (22) using one of the at least one of the radio interface and one of the wired interface and wireless interface.

15. The network node (20) of Claim 14, wherein the processing circuitry (34) is further configured to perform all steps of the method according to any one of claims 2 to 12.

## Patentansprüche

1. Ein Verfahren, das durch einen Netzwerkknoten (20) implementiert wird, **dadurch gekennzeichnet, dass** der Netzwerkknoten (20) eine Brückeneinheit (24) beinhaltet und konfiguriert ist, um mit mindestens einer Kernentität (23) in einem Kernnetzwerk (19) und mindestens einer automatisierten Vorrichtung (22) zu kommunizieren, wobei das Verfahren Folgendes beinhaltet:
Weiterleiten (S100), auf Schicht 2 der Open System Interconnection, OSI, von Controller-Datenpaketen, die von einer drahtlosen Controller-Vorrichtung (21) über eine Funkschnittstelle (32) empfangen werden, an eine automatisierte Vorrichtung (22) über die Brückeneinheit (24), ohne die Controller-Datenpakete an das Kernnetzwerk zu übertragen, um die mindestens eine Kernentität (23) zu umgehen, wobei die Controller-Pakete konfiguriert sind, um die automatisierte Vorrichtung (22) mindestens teilweise zu steuern; und
Veranlassen (S102) der Übertragung der Controller-Datenpakete an die automatisierte Vorrichtung (22) unter Verwendung einer von mindestens einer der Funkschnittstelle und einer von einer drahtgebundenen Schnittstelle und drahtlosen Schnittstelle.

2. Verfahren gemäß Anspruch 1, ferner beinhaltend das Bereitstellen von Closed Loop Gain Control, CLGC, zum mindestens teilweisen Steuern der automatisierten Vorrichtung (22), wobei die Controller-Datenpakete CLGC-Datenpakete sind.

3. Verfahren gemäß Anspruch 1, ferner beinhaltend das Empfangen, über die Funkschnittstelle, der Controller-Datenpakete von der drahtlosen Controller-Vorrichtung (21), wobei die Controller-Datenpakete Closed-Loop-Gain-Control-Datenpakete, CLGC-Datenpakete, sind.

4. Verfahren gemäß Anspruch 3, wobei die Controller-Datenpakete von der drahtlosen Controller-Vorrichtung (21) über ein erstes Protokoll empfangen werden; und
das Umgehen der mindestens einen Kernentität (23) das Konvertieren der Controller-Datenpakete von dem ersten Protokoll in ein zweites Protokoll umfasst.

5. Verfahren gemäß Anspruch 4, wobei das erste Protokoll ein Coarse-and-Fine-Control-Protokoll, CFCP, ist und das zweite Protokoll ein Ethernet-basiertes Protokoll ist.

6. Verfahren gemäß einem der Ansprüche 3 bis 5, ferner beinhaltend mindestens eines von Folgendem:
Vorabzuteilen mindestens eines Slots an die drahtlose Controller-Vorrichtung (21); und
Zuweisen von Ressourcen an die automatisierte Vorrichtung (22) in dem mindestens einen Slot, bis ein vordefiniertes Ereignis stattfindet.

7. Verfahren gemäß Anspruch 6, wobei das vordefinierte Ereignis eine Beendigung der Steuerung für die automatisierte Vorrichtung (22) ist.

8. Verfahren gemäß einem der Ansprüche 1 bis 7, wobei die Übertragung der Controller-Datenpakete an die automatisierte Vorrichtung (22) unter Verwendung der Funkschnittstelle stattfindet.

9. Verfahren gemäß einem der Ansprüche 1 bis 7, wobei die Übertragung der Controller-Datenpakete an die automatisierte Vorrichtung (22) unter Verwendung der einen von der drahtgebundenen Schnittstelle und drahtlosen Schnittstelle stattfindet.

10. Verfahren gemäß einem der Ansprüche 1 bis 9, wobei die Übertragung der Controller-Datenpakete an die automatisierte Vorrichtung (22) eine isochrone Übertragung ist.

11. Verfahren gemäß einem der Ansprüche 1 bis 10, wobei die mindestens eine Kernentität (23), die umgangen wird, mindestens ein Serving Gateway, SGW (12), ist.

12. Verfahren gemäß einem der Ansprüche 1 bis 11, wobei die eine von der drahtgebundenen Schnittstelle und drahtlosen Schnittstelle eine Schnittstelle für ein Ethernet-basiertes PROFINET-Protokoll ist.

13. Ein computerlesbares Medium (37), das Codeabschnitte beinhaltet, die, wenn sie auf einem Prozessor (36) eines Netzwerkknotens (20) ausgeführt werden, den Netzwerkknoten konfigurieren, um alle Schritte des Verfahrens gemäß einem der vorhergehenden Verfahrensansprüche durchzuführen.

14. Ein Netzwerkknoten (20), der konfiguriert ist, um mit mindestens einer Kernentität (23) in einem Kernnetzwerk (19) und mindestens einer automatisierten Vorrichtung (22) zu kommunizieren, wobei der Netzwerkknoten (20) Folgendes beinhaltet:
eine Funkschnittstelle (32) und eine von einer drahtgebundenen Schnittstelle und drahtlosen Schnittstelle; und
**dadurch gekennzeichnet, dass** der Netzwerkknoten (20) ferner eine Verarbeitungsschaltung (34) beinhaltet, die eine Brückeneinheit (24) beinhaltet, wobei der Verarbeitungsschaltkreis für Folgendes konfiguriert ist:
Weiterleiten, auf Schicht 2 der Open System Interconnection, OSI, von Controller-Datenpaketen, die von einer drahtlosen Controller-Vorrichtung (21) über die Funkschnittstelle (32) empfangen werden, an eine automatisierte Vorrichtung (22) über die Brückeneinheit (24), ohne die Controller-Datenpakete an das Kernnetzwerk zu übertragen, um die mindestens eine Kernentität zu umgehen, wobei die Controller-Pakete konfiguriert sind, um die automatisierte Vorrichtung (22) mindestens teilweise zu steuern; und
Veranlassen der Übertragung der Controller-Datenpakete an die automatisierte Vorrichtung (22) unter Verwendung einer von der mindestens einen der Funkschnittstelle und einer von der drahtgebundenen Schnittstelle und drahtlosen Schnittstelle.

15. Netzwerkknoten (20) gemäß Anspruch 14, wobei die Verarbeitungsschaltung (34) ferner konfiguriert ist, um alle Schritte des Verfahrens gemäß einem der Ansprüche 2 bis 12 durchzuführen.

## Revendications

1. Un procédé mis en œuvre par un nœud de réseau (20), **caractérisé en ce que** le nœud de réseau (20) comprend une unité de pont (24) et est configuré pour communiquer avec au moins une entité centrale (23) dans un réseau central (19) et au moins un dispositif automatisé (22), le procédé comprenant :
le fait de réacheminer (S100), au niveau d'une couche OSI (*Open System Interconnection*, interconnexion de systèmes ouverts) 2, des paquets de données de contrôleur reçus d'un dispositif non filaire de contrôleur (21) via une interface radio (32) vers un dispositif automatisé (22) via l'unité de pont (24) sans transmettre les paquets de données de contrôleur au réseau central afin de contourner l'au moins une entité centrale (23), les paquets de contrôleur étant configurés pour contrôler au moins en partie le dispositif automatisé (22) ; et
le fait de provoquer (S102) la transmission des paquets de données de contrôleur vers le dispositif automatisé (22) à l'aide d'une interface parmi au moins une interface de l'interface radio et une interface d'une interface filaire et interface non filaire.

2. Le procédé de la revendication 1, comprenant en outre le fait de fournir un contrôle de gain en boucle fermée, CLGC (*Closed Loop Gain Control*), pour contrôler au moins en partie le dispositif automatisé (22), les paquets de données de contrôleur étant des paquets de données CLGC.

3. Le procédé de la revendication 1, comprenant en outre le fait de recevoir, via l'interface radio, les paquets de données de contrôleur du dispositif non filaire de contrôleur (21), les paquets de données de contrôleur étant des paquets de données de contrôle de gain en boucle fermée, CLGC.

4. Le procédé de la revendication 3, dans lequel les paquets de données de contrôleur sont reçus du dispositif non filaire de contrôleur (21) via un premier protocole ; et le fait de contourner l'au moins une entité centrale (23) inclut le fait de convertir les paquets de données de contrôleur du premier protocole en un deuxième protocole.

5. Le procédé de la revendication 4, dans lequel le premier protocole est un protocole de contrôle grossier et fin, CFCP (*Coarse and Fine Control Protocol*), et le deuxième protocole est un protocole basé sur Ethernet.

6. Le procédé de l'une quelconque des revendications 3 à 5, comprenant en outre au moins un élément parmi :
le fait de pré-allouer au moins un créneau au dispositif non filaire de contrôleur (21) ; et
le fait d'attribuer des ressources au dispositif automatisé (22) dans l'au moins un créneau jusqu'à ce qu'un événement prédéfini se produise.

7. Le procédé de la revendication 6, dans lequel l'événement prédéfini est une fin de contrôle sur le dispositif automatisé (22).

8. Le procédé de l'une quelconque des revendications 1 à 7, dans lequel la transmission des paquets de données de contrôleur vers le dispositif automatisé (22) se produit à l'aide de l'interface radio.

9. Le procédé de l'une quelconque des revendications 1 à 7, dans lequel la transmission des paquets de données de contrôleur vers le dispositif automatisé (22) se produit à l'aide de cette une interface des interface filaire et interface non filaire.

10. Le procédé de l'une quelconque des revendications 1 à 9, dans lequel la transmission des paquets de données de contrôleur vers le dispositif automatisé (22) est une transmission isochrone.

11. Le procédé de l'une quelconque des revendications 1 à 10, dans lequel l'au moins une entité centrale (23) qui est contournée est au moins une passerelle de service, SGW (*Serving Gateway*) (12).

12. Le procédé de l'une quelconque des revendications 1 à 11, dans lequel cette une interface des interface filaire et interface non filaire est une interface pour un protocole PROFINET basé sur Ethernet.

13. Un support lisible par ordinateur (37) comprenant des portions de code qui, lorsqu'elles sont exécutées sur un processeur (36) d'un nœud de réseau (20), configurent le nœud de réseau pour réaliser toutes les étapes du procédé selon l'une quelconque des revendications de procédé précédentes.

14. Un nœud de réseau (20) configuré pour communiquer avec au moins une entité centrale (23) dans un réseau central (19) et au moins un dispositif automatisé (22), le nœud de réseau (20) comprenant :
une interface radio (32) et une interface d'une interface filaire et interface non filaire ; et **caractérisé en ce que** le nœud de réseau (20) comprend en outre une circuiterie de traitement (34) comprenant une unité de pont (24), la circuiterie de traitement étant configurée pour :
réacheminer, au niveau d'une couche OSI (*Open System Interconnection*) 2, des paquets de données de contrôleur reçus d'un dispositif non filaire de contrôleur (21) via l'interface radio (32) vers un dispositif automatisé (22) via l'unité de pont (24) sans transmettre les paquets de données de contrôleur au réseau central afin de contourner l'au moins une entité centrale, les paquets de contrôleur étant configurés pour contrôler au moins en partie le dispositif automatisé (22) ; et
provoquer la transmission des paquets de données de contrôleur vers le dispositif automatisé (22) à l'aide d'une interface parmi l'au moins une interface de l'interface radio et une interface des interface filaire et interface non filaire.

15. Le nœud de réseau (20) de la revendication 14, dans lequel la circuiterie de traitement (34) est en outre configurée pour réaliser toutes les étapes du procédé selon l'une quelconque des revendications 2 à 12.
